(19) Europäisches Patentamt
European Patent Office
Office européen des brevets

(11) **EP 3 224 582 B1**

(12) **EUROPÄISCHE PATENTSCHRIFT**

(45) Veröffentlichungstag und Bekanntmachung des Hinweises auf die Patenterteilung:
**15.12.2021 Patentblatt 2021/50**

(21) Anmeldenummer: **15793689.9**

(22) Anmeldetag: **29.10.2015**

(51) Int Cl.:
*F21S 41/176* (2018.01)     *G02B 6/08* (2006.01)
*H04N 1/113* (2006.01)     *G01H 9/00* (2006.01)
*G02B 26/08* (2006.01)     *G02B 26/10* (2006.01)
*F21S 8/00* (2006.01)

(86) Internationale Anmeldenummer:
**PCT/AT2015/050272**

(87) Internationale Veröffentlichungsnummer:
**WO 2016/081966 (02.06.2016 Gazette 2016/22)**

(54) **MESSUNG DER SCHWINGUNGSAMPLITUDE EINES SCANNERSPIEGELS**

MEASURING THE VIBRATION AMPLITUDE OF A SCANNER MIRROR

MESURE DE L'AMPLITUDE DE VIBRATION D'UN MIROIR DE BALAYAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.11.2014 AT 508492014**

(43) Veröffentlichungstag der Anmeldung:
**04.10.2017 Patentblatt 2017/40**

(73) Patentinhaber: **ZKW Group GmbH**
**3250 Wieselburg (AT)**

(72) Erfinder:
• **MITTERLEHNER, Thomas**
**3240 Mank (AT)**
• **GRIESSLER, Christian**
**3052 Neustift-Innermanzing (AT)**

(74) Vertreter: **Patentanwaltskanzlei**
**Matschnig & Forsthuber OG**
**Biberstraße 22**
**Postfach 36**
**1010 Wien (AT)**

(56) Entgegenhaltungen:
**EP-A- 2 767 751     JP-A- 2001 012 921**
**US-A1- 2006 187 497     US-A1- 2011 084 609**
**US-A1- 2012 300 197     US-A1- 2013 188 043**

• **None**

**Beschreibung**

Die Erfindung betrifft ein Verfahren zum Messen der Schwingungsamplitude eines Scannerspiegels, bei welchem ein von einer Laserquelle erzeugter Laserstrahl auf den Scannerspiegel gerichtet und von diesem reflektiert wird und der so reflektierte Laserstrahl auf eine Detektoreinrichtung fällt. Die Auswertung der Schwingungsbewegung erfolgt hierbei mithilfe der Detektoreinrichtung.

Verfahren dieser Art kommen insbesondere in Laserprojektionssystemen von Scheinwerfern und ähnlichen Beleuchtungssystemen zur Verwendung. Laserprojektionssysteme können durch die Ablenkung eines Laserstrahls durch sogenannte Mikroscanner realisiert werden. Diese Mikroscanner können z.B. als in MEMS- oder MOEMS-Technik (Micro-Electro-Mechanical Systems bzw. Micro-Opto-Electro-Mechanical Systems) gefertigte Mikrospiegel ausgeführt sein, die nur wenige Millimeter Durchmesser aufweisen und in ein oder zwei Achsrichtungen in Schwingung versetzt werden können. Für die ordnungsgemäße Funktion eines solchen Laserprojektionssystems ist es von großer Wichtigkeit, die aktuelle Auslenkung (Dimension eines Winkels) des Mikroscanners zu erfassen und elektronisch zu verarbeiten, sodass die Modulation der Laserströme exakt mit der Spiegelschwingung synchronisiert werden kann, um ein bestimmtes Bild, beispielsweise in Form einer stehenden Lichtverteilung, erzeugen zu können.

Im Wesentlichen müssen zwei Kenngrößen der Spiegelschwingung ausgewertet werden, nämlich die Schwingungsamplitude, d.i. die Amplitude der Spiegelschwingung, sowie die Phasenverschiebung oder Phasenlage, d.i. die Verschiebung des Nulldurchgangs. Die Schwingungsamplitude bestimmt die Breite des erzeugten Lichtbildes und muss - in der Regel auf elektronischem Wege - auf einen exakten Wert geregelt werden. Die Phasenverschiebung verursacht einen Zeitversatz zwischen dem Ansteuersignal des Mikroscanners und der eigentlichen Spiegelschwingung, die zur optimalen Synchronisierung der Laser-Modulation verwendet werden kann.

Zur Messung der Spiegelauslenkung kann auf verschiedene Sensoren zurückgegriffen werden, deren Auswertung häufig sehr aufwändig ist. Hierbei unterscheidet man interne Sensoren (z.B. kapazitive, piezo-elektrische Sensoren), die direkt im Mikroscanner integriert sind, und externe Sensoren, die unabhängig vom eigentlichen Mikroscanner verwendet werden können. Für einen externen Sensor wird zumeist ein PSD ("Position Sensitive Detector") verwendet.

Die externen Sensoren messen die Position eines vom Mikroscanner abgelenkten kollimierten Laserstrahles, der jedoch nicht zur eigentlichen Bilderzeugung herangezogen wird, sondern einzig und allein zur Positionsmessung verwendet wird ("Mess-Laserstrahl").

Bekannte Lösungen wie kapazitive Feedback-Messungen, PSDs oder Auswertungen auf Basis von Piezo-Sensoren führen zu elektronisch aufwändiger Auswertung, da bei all diesen Sensoren sehr kleine Ströme bzw. Spannungen gemessen werden müssen, weshalb Verstärkerschaltungen eingesetzt werden müssen, die häufig sehr störanfällig sein können.

Bei Verwendung eines PSD muss ein großer elektronischer Aufwand betrieben werden, um die Signale des PSD so umzuformen, dass sie elektronisch ausgewertet werden können (Stromverstärker usw.). Eine deutlich einfachere Lösung besteht in der Verwendung von Quadrantendioden. Quadrantendioden sind wohlbekannt; sie enthalten eine Anordnung von vier flächigen Photodioden, die gleich groß und nebeneinander in einer "quadratischen" Anordnung positioniert sind, sodass zwischen ihnen nur ein schmaler, kreuzförmiger Spalt verbleibt. Diese Dioden liefern zwar einen Photostrom, der von der Intensität des einfallenden Lichts abhängt, für den hier betrachteten Zweck eignet sich der Photostrom jedoch für die digitale Auswertung, in welchem der vier Quadranten sich der Laserstrahl gerade befindet. Hierdurch ist die Messung der Phasenlage einwandfrei möglich. Jedoch ist eine Amplitudenmessung, die zur Realisierung eines Laserprojektionssystems nötig ist, bei konventioneller Verwendung durch Quadrantendioden nicht möglich.

US 2011/084609 A1 beschreibt eine Beleuchtungseinrichtung, worin zum Bestimmen einer Positionsänderung des Laserstrahls ein Quadranten-Detektor verwendet wird. US 2006/0187497 A1 offenbart einen elektrischen Schaltkreis zum Detektieren eines Phasenfehlers in einem Scanner-System für Bilder.

Die Erfindung soll daher ein Verfahren schaffen, das die Messung der Schwingamplitude eines Mikroscanners auch bei Verwendung einer einfachen Detektoreinrichtung wie einer Quadrantendiode herkömmlicher Bauart erlaubt. Spezifisch soll eine Detektoreinrichtung verwendbar sein, welche nebeneinander liegende Detektorelemente (Detektorfelder) aufweist, die nach Art einer Photodiode ein Signal liefern, wenn auf sie Licht z.B. in Form des Laserstrahls fällt. Es soll hierbei bereits ausreichend sein, wenn das Signal anzeigt, ob die jeweilige Fläche beleuchtet ist (digitales Signal, On/Off).

Diese Aufgabe wird von einem Verfahren gemäß den beigefügten Ansprüchen gelöst. Eine Detektoreinrichtung wird verwendet, welche mehrere nebeneinander um das Zentrum der Detektoreinrichtung angeordnete Photodetektorelemente aufweist, wobei der Laserstrahl aufgrund der Schwingungsbewegung des Scannerspiegels eine um einen Mittelpunkt verlaufende Kurve über die Detektorelemente beschreibt; in Bezug auf zumindest einen Detektorbereich, der jeweils von einem Detektorelement oder einer Gruppe unmittelbar nebeneinanderliegender Detektorelemente gebildet wird und der entweder dem negativen oder dem positiven Wertebereich einer (vorgebbaren oder z.B. auf der Detektoreinrichtung abgebildeten bzw. auf der Detektoreinrichtung definierten) Koordinate entspricht, erfolgt die Messung dadurch, dass

- die Kurve bzw. die durch sie erzeugte Lichtverteilung hinsichtlich ihres Mittelpunkts um einen Offsetwert gegenüber dem Zentrum der Detektoreinrichtung entlang der dem jeweiligen Detektorbereich zugeordneten Koordinate versetzt wird,
- die Zeitdauer bestimmt wird, in der die Kurve jeweils den Detektorbereich durchläuft,
- unter Verwendung des Verhältnisses der so bestimmten Zeitdauer zur Gesamtdauer einer Schwingungsperiode und des Offsetwertes ein Wert der Schwingungsamplitude bestimmt wird.

Hierbei kann als Detektoreinrichtung bevorzugt ein Quadrantendetektor, insbesondere eine Quadrantendiode, verwendet werden, worin um deren Zentrum angeordnet vier Detektorfelder vorhanden sind, wobei je zwei benachbarte Felder des Quadrantendetektors einen Detektorbereich bilden, die der Koordinate zugeordnet sind, an der beiderseits die zwei Felder anliegen.

Diese erfindungsgemäße Lösung löst die gestellte Aufgabe auf überraschend effiziente Weise und ermöglicht eine unproblematische elektronische Auswertung. Die Erfindung ermöglicht das Messen von Schwingungsamplituden mit einer Detektoreinrichtung nach Art einer Quadrantendiode. Da Quadrantendioden bzw. auf Photoelementen beruhende Detektoren kostengünstig sind und die elektronische Auswertung dieser Detektoren im Vergleich zu anderen Sensoren (z.B. Kapazitätsmessung, Messung niedriger Photodiodenströme in PSDs) sehr einfach ist, ergibt sich in vorteilhafter Weise ein übersichtlicheres Messverfahren und eine Kostenverringerung der Messeinrichtung zur Durchführung des erfindungsgemäßen Messverfahrens. Das erfindungsgemäße Verfahren eignet sich in besonderem Maße für die Messung der Schwingungsamplitude eines Scannerspiegels in einem Projektionssystem eines KFZ-Scheinwerfers.

Eine Weiterbildung des erfindungsgemäßen Verfahrens sieht die Ausführung für mehrere, vorzugsweise zwei, Koordinatenrichtungen vor. Hierbei würden die Koordinatenrichtungen in einem Winkel, vorzugsweise rechten Winkel, zueinander liegen, wobei jeder Koordinatenrichtung jeweils ein Detektorbereich zugeordnet ist und mithilfe der Detektorbereiche Werte der Schwingungsamplitude für die jeweils zugeordnete Koordinatenrichtung bestimmt werden. Dabei kann die Schwingung in den Richtungen verschiedener Koordinaten mit verschiedenen Frequenzen erfolgen.

Um eine erhöhte Fehlersicherheit zu erreichen, kann es vorteilhaft sein, wenn ein erstes Signal, das den Durchlauf der Kurve durch den jeweiligen Detektorbereich beschreibt, sowie ein zweites Signal gebildet wird, das den Durchlauf der Kurve durch das Gebiet, das auf der Detektoreinrichtung dem jeweiligen Detektorbereich komplementär ist, und durch eine logische UND-Verknüpfung des ersten Signales mit dem negierten zweiten Signal ein Feedbacksignal gebildet wird, anhand dessen die jeweilige Zeitdauer bestimmt wird, in der die Kurve den jeweiligen Detektorbereich durchläuft.

Die Erfindung samt weiterer Einzelheiten und Vorzüge wird im Folgenden anhand eines Ausführungsbeispiels näher erläutert, das in den beigefügten Zeichnungen dargestellt ist. Die Zeichnungen zeigen in schematischer Form:

Fig. 1     eine Übersicht über ein Laser-Projektionssystem mit einem Scannerspiegel;

Fig. 2     ein Schaltbild mit einer Quadrantendiode zur erfindungsgemäßen Auswertung nach der X-Koordinate;

Fig. 3     ein Schaltbild mit der Quadrantendiode der Fig. 2, jedoch zur Auswertung nach der Y-Koordinate;

Fig. 4     ein Lichtbild, das als Kurve des Laserstrahl-Lichtflecks auf der Quadrantendiode erzeugt wird;

Fig. 5     die Signalverläufe für das Lichtbild der Fig. 4;

Fig. 6     ein Lichtbild ähnlich wie in Fig. 4, jedoch mit einem Offset vom Zentrum; und

Fig. 7     die Signalverläufe für das Lichtbild der Fig. 6.

Das Ausführungsbeispiel betrifft die Überwachung und Steuerung der Bewegung eines MOEMS-Scanners in einem KFZ-Scheinwerfer als typisches, wenngleich nicht einschränkendes, Beispiel für ein Laser-Projektionssystem.

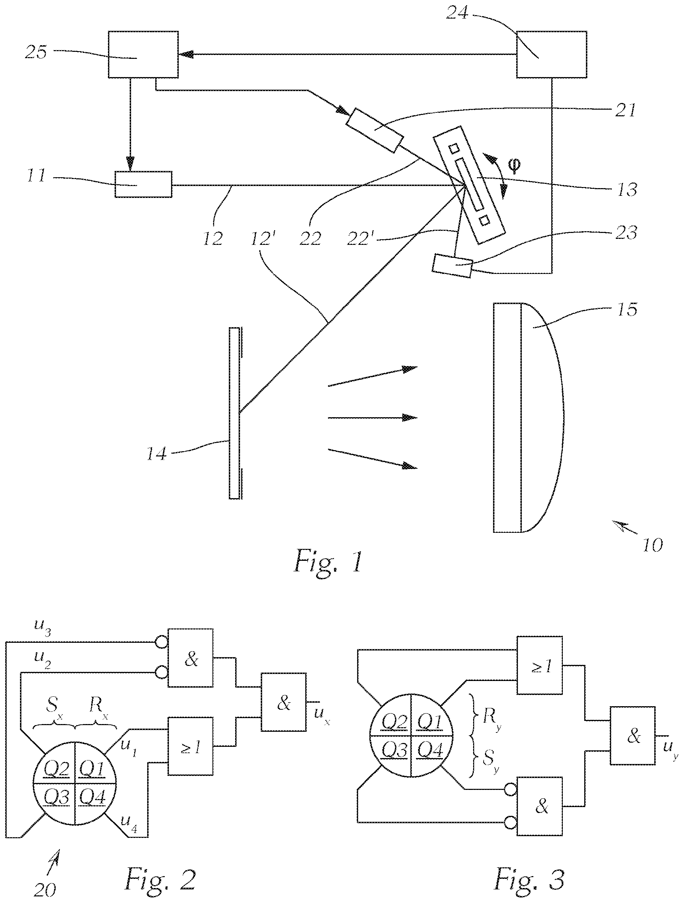

Fig. 1 zeigt eine schematische Übersicht eines Laser-Projektionssystems 10 in einem KFZ-Scheinwerfer. Ein erster Laser 11 (Nutz- oder Haupt-Laser) erzeugt einen ersten Laserstrahl 12, der über einen Spiegel 13 auf ein Konverterelement 14 gerichtet wird; der Spiegel 13 ist nach an sich bekannter Art als MOEMS-Scanner ausgeführt und in zwei Winkelrichtungen beweglich (nur eine Winkelrichtung φ ist in Fig. 1 angedeutet). Aufgrund der Bewegung des Spiegels 13 wird somit auf dem Konverterelement 14 mittels des darauf reflektierten Laserstrahls 12' durch Konversion der Laserstrahlung in vorzugsweise weißes Licht ein Lichtbild erzeugt. Über ein Abbildungssystem 15, das zumindest eine Linse umfasst, wird dieses Lichtbild nach außen (z.B. auf eine Fahrbahn) zu Zwecken der Beleuchtung projiziert wird.

Zur Kontrolle und Steuerung der Lage des Spiegels 13 ist zudem ein zweiter Laser 21 (Mess- oder Steuer-Laser) vorgesehen. Der Mess-Laser 21 kann entsprechend seiner Aufgabe eine deutlich geringere Leistung als der Nutz-Laser 11 aufweisen und gegebenenfalls auch in einem anderen Spektralbereich arbeiten. Der Laserstrahl 22 des Mess-Lasers 21 wird über den Spiegel 13 auf eine Detektoreinrichtung 23 gelenkt. Der auf die Detektoreinrichtung 23 fallende Mess-Laserstrahl 22' erfährt somit Ablenkungen, die denen des ersten Laserstrahls 12' direkt entsprechen, wenngleich bei unterschiedlichem primärem Strahlverlauf. Der Mess-Laserstrahl 22' kann, falls erforderlich, mithilfe einer (nicht gezeigten) Optik auf die Detektoreinrichtung 23 fokussiert werden. Die Detektoreinrichtung 23 erzeugt aufgrund der Position des Einfallens des Mess-Laserstrahls 22' Signale, die einem Mikrocontroller 24 zugeführt und dort ausgewertet werden. Der Mikrocontroller 24 gibt ein entsprechendes Signal an die Steuereinheit 25 des ersten Lasers 11 weiter, um so die elektrische Modulation des Lasers 11 entsprechend den Spiegelschwingungen zu regeln. Die Schwingungsbewegung des Spiegels wird vorzugsweise durch eine resonante Anregung erzeugt, kann jedoch bei Bedarf zusätzlich durch die Steuereinheit kontrolliert werden (nicht gezeigt), beispielsweise durch Steuern der Frequenz oder Intensität des Anregungssignals.

In dem Ausführungsbeispiel ist die Detektoreinrichtung 23 als Quadrantendiode 20 ausgebildet. Die einzelnen Detektorflächen (Photodioden) der Quadrantendiode 20 sind, wie in Fig. 2 und 3 erkennbar, im Umlaufrichtung entgegen den Uhrzeigersinn als Q1, Q2, Q3, Q4 durchnummeriert. Beispielsweise kann der in einer Photodiode $Qn$ ($n$ = 1, ... 4) erzeugte elektrische Strom über einen Widerstand geführt werden, und die abfallende (zeitabhängige) Spannung un(t) wird direkt an einen Eingang des Mikrocontrollers 24 oder an eine diesem vorgeschaltete Logik weitergeleitet. Jede Detektorfläche der Quadranten Q1, Q2, Q3, Q4 liefert somit ein Signal u1(t) ... u4(t), das entweder 1 (symbolisch für eine Signalspannung $u_s$>0) oder 0 ist, je nachdem, ob die Fläche des Quadranten gerade beleuchtet wird oder nicht. Der Signalverlauf für die X-Richtung entsteht durch eine logische ODER-Verknüpfung u1(t) $\vee$ u4(t) der Signale der Quadranten Q1 und Q4, die somit gemeinsam einen Detektorbereich Rx für die X-Koordinate darstellen. Der Signalverlauf für die Y-Richtung wird in entsprechender Art ein Detektorbereich $R_Y$ aus den Quadranten Q1 und Q2 zugrunde gelegt, sodass ein dem Detektorbereich $R_Y$ entsprechendes Signal durch eine logische ODER-Verknüpfung u1(t) $\vee$ u2(t) der Signale der Quadranten Q1 und Q2 erzeugt wird. Zusätzlich ist es vorteilhaft, wenn unter Verwendung einer logischen UND-Verknüpfung die (negierten) Zustände der jeweils verbleibenden Quadranten abgefragt werden. Dies gestattet den Ausschluss von Störungen wie z.B. aufgrund von Restlicht und gestattet eine zuverlässige Auswertung von Zuständen, bei denen der vom Laserstrahl erzeugte Lichtfleck auf die Grenzlinie zwischen zwei angrenzenden Felder fällt und so zu gleichzeitiger Beleuchtung zweier (oder mehrerer) Felder bzw. Detektorbereiche führt. Mit anderen Worten wird einerseits das Signal des gewählten Detektorbereichs $R_X$, $R_Y$ und andererseits das Signal für das Gebiet $S_X$, $S_Y$, das dem jeweiligen Detektorbereich $R_X$, $R_Y$ komplementär ist, gebildet, und ein "Feedbacksignal" wird durch eine logische UND-Verknüpfung des ersten Signales mit dem negierten zweiten Signal gebildet.

Fig. 2 und 3 zeigen schematische Beispiele der Verarbeitung der Signale der Quadrantendiode 20 entsprechend dem oben Gesagten. Fig. 2 zeigt eine mögliche Verschaltung für die Auswertung nach der X-Koordinate, nämlich ob die Position des Laserstrahls bei einem positiven Wert x > 0 der X-Koordinate liegt. Dies entspricht einer symbolischen Verknüpfung

$$U_X = (u1 \vee u4) \wedge \overline{(u2 \vee u3)} \, ,$$

wobei der besseren Lesbarkeit halber die Zeitabhängigkeit der Signale u$n$(t) unterdrückt wurde. Analog erfolgt die Auswertung nach positiven Werten y > 0 der Y-Koordinate gemäß

$$U_Y = (u1 \vee u2) \wedge \overline{(u3 \vee u4)} \, ,$$

was beispielhaft in Fig. 3 illustriert ist. Anstelle einer Realisierung durch logische Gatter kann die logische Auswertung natürlich auch in dem Mikrocontroller 24, beispielsweise programmgesteuert, erfolgen.

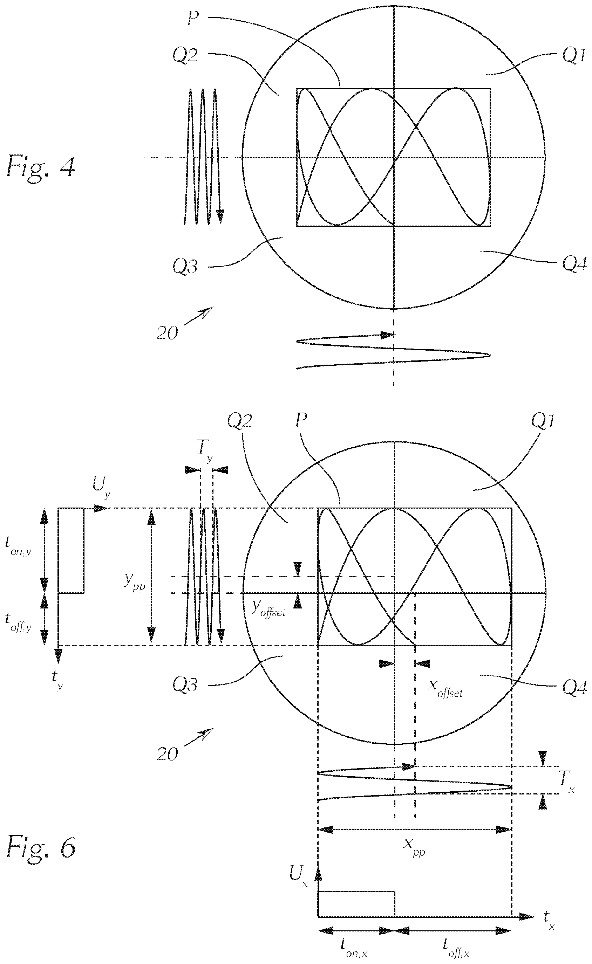

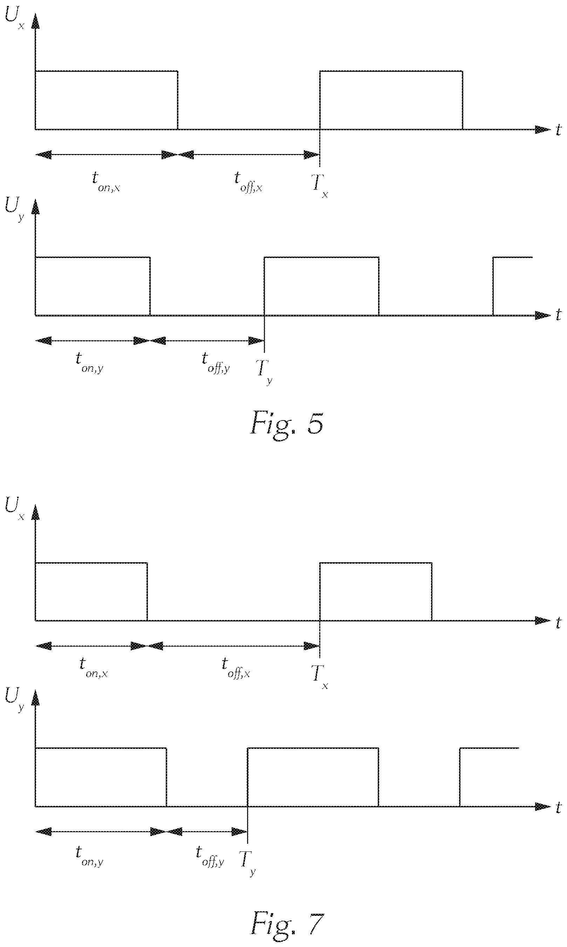

Gemäß herkömmlicher Messverfahren würde eine Quadrantendiode so verwendet werden, dass eine von dem Positionslaser und dem Mikroscanner erzeugte Lichtverteilung P, die typischer Weise in ein Rechteck eingeschrieben ist, ("Rechtecklichtverteilung", beispielsweise eine Lissajou-Figur) genau mittig auf die Quadrantendiode trifft, wie in Fig. 4 gezeigt ist. Die Lichtverteilung P entspricht der Kurve, die der Laser-Lichtfleck, der auf der Detektorfläche der Quadrantendiode erzeugt wird, durchläuft. Der Lichtfleck bewegt sich z.B. mit einer ersten Frequenz in X-Richtung (von links nach rechts und zurück) und mit einer zweiten Frequenz in Y-Richtung (von oben nach unten und zurück), wobei die erste und die zweite Frequenz im Allgemeinen verschieden sind; zumeist wird ein ganzzahliges Verhältnis der beiden Frequenzen gewählt, so dass sich eine geschlossene Lissajou-Figur ergibt. Durch Auswertung der einzelnen Quadranten werden Feedbacksignale U$_X$(t) und U$_Y$(t) erhalten, die Verläufe wie beispielsweise in Fig. 5 gezeigt annehmen können. Für jedes Signal wird jeweils eine Einschaltdauer t$_{ON,X}$ bzw. t$_{ON,Y}$ bestimmt, nämlich als die Dauer, über die das jeweilige Signal >0 ist. Die Einschaltdauer kann auf die Periodendauer T$_X$ bzw. T$_Y$ der Spiegelschwingung bezogen werden und ergibt dann eine relative Einschaltdauer $t_{ON,X}/T_X$ bzw. $t_{ON,Y}/T_Y$, die z.B. als Prozentzahl ausgedrückt werden kann. Die Dauer, über die ein Signal =0 ist, wird dem entsprechend als $t_{OFF,X}$ bzw. $t_{OFF,Y}$ bezeichnet (Ausschaltdauer).

Bei einer auf das Zentrum der Detektorfläche ausgerichteten Lage der Rechtecklichtverteilung ergibt sich eine relative Einschaltdauer von 50 %. Dies lässt lediglich die Bestimmung des Zeitpunkts zu, an dem die Mittenposition durchlaufen wird, während eine Auswertung der räumlichen Amplitude der Schwingung für die X- und Y-Richtung nicht möglich ist.

Gemäß der Erfindung wird der Mittelpunkt der von Positionslaser und Mikroscanner erzeugten Lichtverteilung P sowohl in X-Richtung als auch in Y-Richtung mit einem geringen Offset $x_{offset}$, $y_{offset}$ versehen, dessen Größe genau definiert ist. Dies ist in Fig. 6 dargestellt. Der Offset wird einmalig für das System eingestellt, wobei die Werte $x_{offset}$, $y_{offset}$ vermessen und auf einen vordefinierten Wert justiert werden, beispielsweise mit einem während der Konfiguration verwendeten Kamerasystem (nicht gezeigt); der Offset bleibt nach dieser Konfiguration gleich. Anstelle der Vorgabe vordefinierter Werte können auch die Werte $x_{offset}$, $y_{offset}$, die sich während der Konfiguration ergeben, sofern der Mittelpunkt innerhalb eines geeigneten Bereichs liegt, gemessen werden. Die so bestimmten Werte werden z.B. in dem Mikrocontroller 24 oder einem diesem zugeordneten Speicher gespeichert. Die Offset-Werte $x_{offset}$, $y_{offset}$ stehen somit für nachfolgende Auswertungen der Schwingungsbewegung wie im Folgenden beschrieben zur Verfügung.

Fig. 7 zeigt ein Beispiel eines zugehörenden Signalverlaufs der Feedbacksignale $U_X(t)$ und $U_Y(t)$. Wie daran ersichtlich ist, weicht die Einschaltdauer von 50% ab, wobei nunmehr der Wert der Abweichung von der maximalen Auslenkung der Lichtverteilung abhängig ist. Aufgrund der Kenntnis des Bewegungsmuster des Laserlichtflecks - im Falle einer Lissajou-Figur ein sinusförmiger Verlauf, der durch eine resonante Schwingung des Mikroscanners erzeugt wird - kann durch Messung der Einschaltdauer (Zeitmessung) einfach auf die Schwingamplitude des Mikroscanners zurückgerechnet werden.

Beispielsweise kann die Schwingungsamplitude $x_p$ wie folgt berechnet werden:

$$x_p = x_{pp}/2 = x_{offset} / \sin(\pi \cdot (T_X - 2t_{ON,X})/2T_X)$$
$$= x_{offset} / \cos(\pi \cdot t_{ON,X}/T_X)$$

wobei folgende Abkürzungen verwendet werden:

$x_p$  Schwingungsamplitude in X-Richtung,
$x_{pp}$  Peak-to-Peak-Auslenkung der Spiegelschwingung entlang der X-Richtung, $x_{pp} = 2\,x_p$;
$x_{offset}$  Offset in X-Richtung zwischen Mittelpunkt der Lichtverteilung und Mittelpunkt der Quadrantendiode (Projektion des Offsetvektors auf die X-Richtung),
$T_X$  Periodendauer der Spiegelschwingung ($T_X = 1/f_X$, $f_X$ = Schwingungsfrequenz),
$t_{ON,X}$  Einschaltdauer des Feedbacksignals $U_X$.

Die Formel kann *mutatis mutandis* ebenso für jede beliebige Koordinatenrichtung angewendet werden, wobei dann anstelle $x_p$ die Schwingungsamplitude in der betreffenden Koordinatenrichtung und anstelle $x_{offset}$ die Projektion des Offsetvektors auf die Koordinatenrichtung tritt. Insbesondere kann die Formel natürlich für die Schwingungsamplitude in der Y-Richtung angewendet werden:

$$y_p = y_{pp}/2 = y_{offset} / \sin(\pi \cdot (T_Y - 2t_{ON,Y})/2T_Y)) = y_{offset} / \cos(\pi \cdot t_{ON,Y}/T_Y)$$

mit analogen Definitionen der Größen $y_p$, $y_{pp}$, $y_{offset}$.

Die Zeitmessung und die Umrechnung auf den Wert der Schwingamplitude kann somit gemäß der Erfindung sehr einfach mittels digitaler logischer Auswertung über diskrete Logikbausteine und/oder Mikrocontroller realisiert werden. (Der Zusammenhang zwischen der Lichtkurve und den Verhältnissen $t_{ON,X} : t_{OFF,X}$ bzw. $t_{ON,Y} : t_{OFF,Y}$ ist in Fig. 7 symbolisch gezeigt, denn wegen der inhärenten Nichtlinearität entspricht dieser nicht direkt, sondern nur in einer ersten Näherung, dem graphischen Verhältnis. )

Wenn die Schwingung von einer Sinusschwingung abweicht, kann an die Stelle der Sinus- bzw. Kosinus-Funktion eine andere, der Schwingungsform entsprechende Funktion treten., mit der die Berechnung erfolgt:

$$x_p = x_{offset} / f(t_{ON,X}/T_X),$$

$$y_p = y_{offset} / f(t_{ON,Y}/T_Y)$$

Bei einer Dreiecksform z.B. würde eine lineare Funktion f(x) = 1—2x verwendet werden. Die Funktion f kann vom Fachmann ohne Weiteres entsprechend der Schwingungsform bestimmt werden.

Es versteht sich, dass das Ausführungsbeispiel lediglich zur Illustration der Erfindung dient und die Erfindung nicht darauf eingeschränkt ist. Außerdem kann der Fachmann vielfältige Abänderungen, Ergänzungen und/oder Ersetzungen vornehmen, soweit diese innerhalb des Schutzbereichs gemäß den Ansprüchen fallen. Beispielsweise könnte eine Detektoreinrichtung verwendet werden, die mit mehr als vier Detektorflächen arbeitet, die um das Zentrum der Einrichtung angeordnet sind, z.B. in Form von sechs, acht oder mehr sektorartigen Flächen.

## Patentansprüche

1. Verfahren zum Messen der Schwingungsamplitude eines Scannerspiegels (13) in einem Projektionssystem (10) eines KFZ-Scheinwerfers, bei welchem ein von einer Laserquelle (21) erzeugter Laserstrahl (22) auf den Scannerspiegel (13) gerichtet und von diesem reflektiert wird und der so reflektierte Laserstrahl (22') auf eine Detektoreinrichtung (23) fällt,

   wobei eine Detektoreinrichtung (23) verwendet wird, welche mehrere nebeneinander um ihr Zentrum angeordnete Photodetektorelemente (Q1, Q2, Q3, Q4) aufweist, wobei der Laserstrahl (22') aufgrund der Schwingungsbewegung des Scannerspiegels (13) eine Kurve (P) über die Photodetektorelemente beschreibt, wobei die Kurve in eine rechteckige Lichtverteilung (P) eingeschrieben ist,
   **dadurch gekennzeichnet, dass** in Bezug auf zumindest einen Detektorbereich ($R_X$, $R_Y$), der jeweils von einem Photodetektorelement oder einer Gruppe unmittelbar nebeneinanderliegender Photodetektorelemente gebildet wird und der entweder dem negativen oder dem positiven Wertebereich einer Koordinate entspricht,

   - der Mittelpunkt der von der Laserquelle (21) und Scannerspiegel (13) erzeugten Lichtverteilung (P) um einen Offsetwert ($x_{offset}$, $y_{offset}$) gegenüber dem Zentrum der Detektoreinrichtung (23) entlang der dem jeweiligen Detektorbereich ($R_X$, $R_Y$) zugeordneten Koordinate versetzt wird,
   - die Zeitdauer ($t_{ON,X}$, $t_{ON,Y}$) bestimmt wird, in der die Kurve jeweils den Detektorbereich ($R_X$, $R_Y$) durchläuft,
   - unter Verwendung des Verhältnisses der so bestimmten Zeitdauer ($t_{ON,X}$, $t_{ON,Y}$) zur Gesamtdauer (T) einer Schwingungsperiode und des Offsetwertes ($x_{offset}$, $y_{offset}$) ein Wert der Schwingungsamplitude ($x_p$, $y_p$) bestimmt wird.

2. Verfahren nach Anspruch 1, **dadurch gekennzeichnet, dass** als Detektoreinrichtung (23) ein Quadrantendetektor verwendet wird, welcher um deren Zentrum angeordnet vier Detektorfelder (Q1-Q4) aufweist, wobei je zwei benachbarte Felder des Quadrantendetektors einen Detektorbereich ($R_X$, $R_Y$) bilden, die der Koordinate zugeordnet sind, an der beiderseits die zwei Felder anliegen.

3. Verfahren nach Anspruch 2, wobei die Detektoreinrichtung (23) eine Quadrantendiode (20) ist.

4. Verfahren nach Anspruch 1, 2 oder 3, **dadurch gekennzeichnet, dass** es zwei Koordinatenrichtungen ausgeführt wird, wobei die Koordinatenrichtungen in einem Winkel zueinander liegen und jeder Koordinatenrichtung jeweils ein Detektorbereich ($R_X$, $R_Y$) zugeordnet ist, und mithilfe der Detektorbereiche Werte der Schwingungsamplitude ($x_p$, $y_p$) für die jeweils zugeordnete Koordinatenrichtung bestimmt werden.

5. Verfahren nach Anspruch 4, wobei die Schwingung in den Richtungen verschiedener Koordinaten mit verschiedenen Frequenzen erfolgt.

6. Verfahren nach Anspruch 4 oder 5, wobei die Koordinatenrichtungen in einem rechten Winkel zueinander liegen.

7. Verfahren nach einem der vorhergehenden Ansprüche, bei welchem ein erstes Signal, das den Durchlauf der Kurve durch den jeweiligen Detektorbereich ($R_X$, $R_Y$) beschreibt, sowie ein zweites Signal gebildet wird, das den Durchlauf der Kurve durch das Gebiet ($S_X$, $S_Y$), das auf der Detektoreinrichtung dem jeweiligen Detektorbereich ($R_X$, $R_Y$) komplementär ist, beschreibt, und durch eine logische UND-Verknüpfung des ersten Signales mit dem negierten zweiten Signal ein Feedbacksignal ($U_X$, $U_Y$) gebildet wird, anhand dessen die jeweilige Zeitdauer ($t_{ON,X}$, $t_{ON,Y}$) bestimmt wird, in der die Kurve den jeweiligen Detektorbereich ($R_X$, $R_Y$) durchläuft.

8. Verwendung des Verfahrens nach einem der vorhergehenden Ansprüche für die Messung der Schwingungsamplitude eines Scannerspiegels in einem Projektionssystem (10) eines KFZ-Scheinwerfers, wobei mithilfe des Scannerspiegels ein Nutz-Laserstrahl (12) auf ein Konverterelement (14) gerichtet wird und dort ein Lichtbild erzeugt wird, das zu Beleuchtungszwecken nach außen projiziert wird.

**Claims**

1.  Method for measuring the oscillation amplitude of a scanner mirror (13) in a projection system (10) of a motor vehicle headlight, wherein a laser beam (22) generated by a laser source (21) is directed onto and reflected by the scanner mirror (13) the latter, the laser beam (22') thus reflected arriving on a detector device (23),

    wherein a detector device (23) is used, comprising several photodetector elements (Q1, Q2, Q3, Q4) arranged adjacent to one another about a centre thereof, the laser beam (22') describing a curve (P) across the photodetector elements by virtue of the oscillating movement of the scanner mirror (13), said curve being bordered within a rectangular light distribution,
    **characterised in that**, with respect to at least one detector region ($R_X$, $R_Y$) formed each by a detector element or a group of directly adjacent detector elements and corresponding either to the negative or the positive range of a coordinate,

    - the centre point of the light distribution (P) generated by the laser source (21) and the scanner mirror (13) is displaced by an offset value ($x_{offset}$, $y_{offset}$) from the centre of the detector device (23) along the coordinate associated with the specific detector region ($R_X$, $R_Y$);
    - the time period ($t_{ON,X}$, $t_{ON,Y}$) during which the curve passes through the specific detector region ($R_X$, $R_Y$) is determined;
    - using the ratio of the time period ($t_{ON,X}$, $t_{ON,Y}$) thus determined to the total duration (T) of an oscillation period and using the offset value ($x_{offset}$, $y_{offset}$), a value of the oscillation amplitude ($x_p$, $y_p$) is determined.

2.  The method according to claim 1, **characterised in that** a quadrant detector is used as detector device (23), the quadrant detector having four detector fields (Q1—Q4) arranged about the centre thereof, wherein two adjacent fields respectively of the quadrant detector form a detector region ($R_X$, $R_Y$) associated with the coordinate on either sides of which the two fields are located.

3.  The method according to claim 2, **characterised in that** the detector device (23) is a quadrant diode (20).

4.  The method according to claim 1, 2, or 3, **characterised in that** it is realized for two coordinate directions, wherein the coordinate directions are disposed at an angle to each other and to each coordinate direction a respective detector region ($R_X$, $R_Y$) is allocated, and by means of the detector regions values of the oscillation amplitude ($x_p$, $y_p$) for the respectively associated coordinate direction are determined.

5.  The method according to claim 4, wherein the oscillation occurs in the directions of different coordinates at different frequencies.

6.  The method according to claim 4 or 5, wherein the coordinate directions are disposed at a right angle to each other.

7.  The method according to any one of the preceding claims, including generating a first signal describing the passage of the curve through the respective detector range ($R_X$, $R_Y$) and a second signal describing the passage of the curve through the area ($S_X$, $S_Y$) that is complementary to said detector region ($R_X$, $R_Y$) on the detector device, and generating, by means of a logical AND operation of the first signal with the negated second signal, a feedback signal ($U_X$, $U_Y$), from which the time period ($t_{ON,X}$, $t_{ON,Y}$) is determined, during which the curve passes through the respective detector region ($R_X$, $R_Y$).

8.  Use of the method according to any of the preceding claims for measuring the oscillation amplitude of a scanner mirror in a projection system (10) of a motor vehicle headlight, wherein the scanner mirror is used to direct a performance laser beam (12) onto a converter element (14), producing a light pattern thereon, which is projected outward for the purpose of illumination.

**Revendications**

1. Procédé de mesure de l'amplitude d'oscillation d'un miroir de balayage (13) dans un système de projection (10) d'un projecteur de véhicule automobile, dans lequel un faisceau laser (22) généré par une source laser (21) est dirigé sur le miroir de balayage (13) et réfléchi par celui-ci, et le faisceau laser (22') ainsi réfléchi tombe sur un dispositif détecteur (23),
en utilisant un dispositif de détection (23) comportant une pluralité d'éléments photodétecteurs (Q1, Q2, Q3, Q4) disposés les uns à côté des autres autour de son centre, le faisceau laser (22') décrivant une courbe (P) sur les éléments photodétecteurs à cause du mouvement oscillant du miroir de balayage (13), la courbe étant inscrite dans une distribution de lumière rectangulaire (P), **caractérisé en ce que**, par rapport à au moins une zone de détection ($R_X$, $R_Y$) qui est formée par un élément photodétecteur respectif ou un groupe d'éléments photodétecteurs respectifs situés directement les uns à côté des autres et qui correspond soit à la plage de valeurs négatives, soit à la plage de valeurs positives d'une coordonnée,

   - le centre de la distribution de lumière (P) générée par la source laser (21) et le miroir de balayage (13) est décalé d'une valeur de décalage ($x_{offset}$, $y_{offset}$) par rapport au centre du dispositif de détection (23) le long de la coordonnée associée à la région de détection respective ($R_X$, $R_Y$),
   - la période de temps ($t_{ON,X}$, $t_{ON,Y}$) pendant laquelle la courbe passe respectivement par la zone de détection ($R_X$, $R_Y$) est déterminée,
   - une valeur de l'amplitude d'oscillation ($x_p$, $y_p$) est déterminée en utilisant le rapport entre la durée ($t_{ON,X}$, $t_{ON,Y}$) ainsi déterminée et la durée totale (T) d'une période d'oscillation et la valeur de décalage ($x_{offset}$, $y_{offset}$).

2. Procédé selon la revendication 1, **caractérisé en ce que** l'on utilise comme dispositif de détection (23) un détecteur à quadrant qui comporte quatre champs de détection (Q1—Q4) disposés autour de son centre, respectivement deux champs adjacents du détecteur à quadrant formant une région de détection ($R_X$, $R_Y$) qui est associée à la coordonnée à laquelle les deux champs se trouvent des deux côtés.

3. Procédé selon la revendication 2, dans lequel le dispositif détecteur (23) est une diode à quadrant (20).

4. Procédé selon la revendication 1, 2 ou 3, **caractérisé en ce qu'**il est exécuté dans deux directions de coordonnées, les directions de coordonnées formant un angle l'une par rapport à l'autre et à chaque direction de coordonnées une zone de détection respective ($R_X$, $R_Y$) étant associée, et pour la direction de coordonnées respectivement associée, des valeurs de l'amplitude d'oscillation ($x_p$, $y_p$) étant déterminées à l'aide des zones de détection.

5. Procédé selon la revendication 4, dans lequel l'oscillation se fait dans les directions de coordonnées différentes avec des fréquences différentes.

6. Procédé selon la revendication 4 ou 5, dans lequel les directions de coordonnées sont à angle droit l'une par rapport à l'autre.

7. Procédé selon l'une quelconque des revendications précédentes, dans lequel un premier signal décrivant le passage de la courbe à travers la région de détection respective ($R_X$, $R_Y$) est formé ainsi qu'un second signal décrivant le passage de la courbe à travers la région ($S_X$, $S_Y$) complémentaire de la région de détection respective ($R_X$, $R_Y$) sur le dispositif de détection, et un signal de rétroaction ($U_X$, $U_Y$) est formé par une opération ET logique du premier signal avec le second signal nié, et sur la base dudit signal de rétroaction la période de temps respective ($t_{ON,X}$, $t_{ON,Y}$) dans laquelle la courbe passe par la zone de détection respective ($R_X$, $R_Y$) est déterminée.

8. Utilisation du procédé selon l'une quelconque des revendications précédentes pour la mesure de l'amplitude d'oscillation d'un miroir de balayage dans un système de projection (10) d'un projecteur de véhicule automobile, un faisceau laser utile (12) étant dirigé à l'aide du miroir de balayage sur un élément convertisseur (14) et une image lumineuse y étant générée, laquelle est projetée vers l'extérieur à des fins d'éclairage.

Fig. 1

Fig. 2

Fig. 3

Fig. 4

Fig. 6

Fig. 5

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2011084609 A1
- US 20060187497 A1